# EUROPÄISCHE PATENTSCHRIFT

(11) **EP 1 336 444 B1**
(45) Veröffentlichungstag und Bekanntmachung des Hinweises auf die Patenterteilung: **30.05.2007**
(21) Anmeldenummer: 02003618.2
(22) Anmeldetag: 16.02.2002
(51) Int. Cl.: B22D 11/126, B22D 11/12, B23C 3/14, B23K 37/08

(54) **Mechanischer Kegel-Schälentbarter zum Entfernen von Sauerstoffschneidbärten und -schneidperlen nach dem thermochemischen Querteilen oder Längsteilen von stählernen Werkstücken wie Brammen, Blöcken und Knüppeln**
Mechanical burr remover for oxygen cutting burrs and cutting pearls after the transversal or longitudinal thermomechanical cutting of steel workpieces like slabs, blooms and billets
Dispositif d'ébavurage mécanique pour des bavures engendrées pendant le découpage transversal ou longitudinal à l'oxygène de pièces d'acier comme des brames, lingots et billets

(43) Veröffentlichungstag der Anmeldung: 20.08.2003
(73) Patentinhaber: Fa. AUTE AG Gesellschaft für autogene Technik, 2068 Hauterive / NE (CH)
(72) Erfinder: Lotz, Horst Karl, 2068 Hauterive / NE (CH)
(74) Vertreter: Aue, Hans-Peter

(56) Entgegenhaltungen:
- EP-A- 0 947 264
- EP-A- 1 172 159
- US-A- 4 398 699
- US-A- 4 859 126

## Beschreibung

Die Erfindung bezieht sich auf einen Mechanischer Kegel-Schälentbarter zum Entfernen von Sauerstoffschneidbärten und - schneidperlen nach dem thermochemischen Querteilen oder Längsteilen von auf einem Rollgang ruhenden oder sich bewegenden stählernen Werkstücken wie Brammen, Blöcken und Knüppeln in heißem und kalten Zustand, wobei eine unter einem Winkel von 45 bis 75° zur Waagerechten auf einer Nabe einer Welle gelagerte Kegelstumpf-Walze oder ihr entsprechende Kegelstumpf-Segmentspeichen mit ihren unter dem längsgeteilten oder quergeteilten Werkstück stehenden Oberflächenlinien waagerecht angeordnet sind, wobei die biegefeste Welle mittels einem Doppellager für Längs- und Querkräfte in einem Gehäuse oder Rahmen gehalten und von einem motorischen oder hydraulischen Antrieb drehbar ist und wobei an den Oberflächen der Kegelstumpf-Walze oder Kegelstumpf-Segmentspeichen ein oder mehrere Schälmesser spiralig mit einem Winkel von 0 bis 45° zur Kegelmittelachse verlaufend angeordnet sind, so dass das Schälmesser unter einem Winkel von 5 bis 30° zum Sauerstoffschneidbart steht.

Mit der weltweiten Zunahme von Stahlstranggießanlagen, dem zunehmenden Einsatz von Sauerstoffbrennschneiden zum Unterteilen oder Längsteilen und zur Verbesserung bestehender Anlagen kommt dem maschinellen Entbarten oder dem Entperlen, das heißt dem Entfernen der Sauerstoffschneidbärte an den Unterkanten von Brammen, Blöcken und Knüppeln und dem Entfernen der Sauerstoffschneidperlen üblicherweise an den Oberkanten derselben, möglichst direkt nach dem Querteilen oder Längsteilen, eine immer grössere Bedeutung zu. Insbesondere preiswerte, sichere, wartungsgünstige und oft leicht nachträglich einbaubare Entbarter mit hoher Entbartungsrate sind unverzichtbar für hohe Produktionsleistungen. Es gibt zwar inzwischen eine große Anzahl gut arbeitender Entbarter aber die Kosten, Entbartungsraten, der Wartungsaufwand, vorteilhafte, Einbauorte (im Produktionsablauf) und vor allem Verletzungsgefahren und hohe Lärmpegel lassen noch viel zu wünschen übrig.

Bei allen bekannten und auch im beigefügten Literaturverzeichnis aufgeführten Ausführungen von Entbartern, die soweit erfolgreich im Einsatz sind, gelten folgende Entbartungsprinzipien mit zugehörigen wesentlichen Bauteilen und die inzwischen beklagten Mängel und Nachteile.

### Entbartungsprinzipien:

Die Werkstücke liegen ortsfest mit dem vorderen oder dem hinteren Schneidbart über dem Entbarter zum Entbarten aus dem Werkstück heraus und werden durch Verschieben mittels Rollgang, Treibrollen oder Schiebeeinrichtung entbartet.

Die Werkstücke liegen ortsfest mit dem vorderen oder hinteren Sauerstoffschneidbart über dem Entbarter zum Entbarten aus dem Werkstück heraus und werden durch Verschieben des Entbarters oder durch das Drehen seiner Trommel gegen das fixierte Werkstück vom Sauerstoffschneidbart befreit.

Die Werkstücke werden mit Arbeits- oder Transportgeschwindigkeit auf einem Rollgang bewegt, der vordere und der hintere Sauerstoffschneidbart werden aus dem Werkstück heraus durch überholendes und danach durch gegenlaufendes Verschieben des Entbarters entfernt.

Die Werkstücke werden mit Arbeits- oder Transportgeschwindigkeit auf einem Rollgang bewegt, der vordere und der hintere Sauerstoffschneidbart werden aus dem Werkstück heraus durch überholendes oder gegenläufiges Drehen eines Entbarterrotors abgeschlagen.

Dazu sind die stehenden oder verschiebenden Entbarter der drei ersten Systeme mit geraden, horizontalen Scherleisten oder mit nebeneinander liegenden, vielleicht auch elastisch heb- und senkbaren, viereckigen oder runden Scherklötzen ausgestattet.

Die Entbarter des zweiten Systems tragen am ganzen Umfang verteilt runde, gegebenenfalls auch federnd aufliegende Scherklötze, die schwere Trommel wird von unten gegen das Werkstück hydraulisch angedrückt und mit grossem Kraftaufwand (Bärte werden durchbrochen) gedreht. Durch teilweises nur Abdrehen und Hochklappen bei zähen Stahlgüten kommen zu den hohen Kosten auch noch niedrige Entbartungsraten bei hohem Positionieraufwand.

Die Entbarter des vierten Systems verwenden zum Entbarten am ganzen Umfang und an der ganzen Länge des Rotors verteilt gelenkig befestigte kleine Hämmer, die sich bei hohen Drehzahlen des Rotors durch Fliehkraft aufstellen und so den darüber hinweglaufenden Sauerstoffschneidbart in vielen kleinen Stücken abschlagen. Die erforderlich hohe Drehzahl erzeugt auch hohe Fliehkräfte, die zu gefährlichem Umherfliegen von Bartresten oder teueren Verkleidungen führen. Der Wartungs- und Ersatzteilaufwand ist sehr hoch und die Entbartungsraten lassen auch zu wünschen übrig.

Eine soweit erfolgreicher aber von den obigen Systemen weiter abweichende Ausführung eines Entbarters ist eine längs zum Sauerstoffschneidbart mit einer Vorschubgeschwindigkeit verfahrende Maschine, die ein tellerartiges Scherwerkzeug an einem Hebel von unten gegen die Unterfläche des Werkstücks drückt und den Schneidbart durch pendelndes Hin- und Herschwingen des Hebels in der Waagerechten abschlägt oder abschert. Diese Ausführung, Überwiegend an ruhig liegenden Werkstücken eingesetzt, ist wegen der beschränkten Größe des Scherwerkzeuges nur von ebenfalls beschränkter Produktion, dazu nur unter bestimmten, einschränkenden Umständen, wie hohem Zeitbedarf, großem Platzbedarf, besonders hohen Installationskosten einsetzbar.

Die aus heutiger Sicht erfolgreichsten Entbarter sind nachfolgend kurz erläutert.
Ein ortsfest oder verschiebbar eingesetzter Entbarter mit einem Kolbenkörper, aus dem nebeneinander liegende pressluftbetriebene Kolben, die Scherkappen als Werkzeug tragen, hochschieben und gegen die Unterfläche der Werkstücke drücken und den Sauerstoffschneidbart je nach Materialzusammensetzung und Temperatur abscheren oder abdrücken, wenn der Entbarter oder das Werkstück verschoben werden. Der Hauptnachteil dieses Entbarters ist sein beschränkter oder nur umständlicher Einsatz bei ständig bewegten Werkstücken, seine vielen bewegten Teile und die zeitweise geringe Entbartungsrate (unter 99%), das heißt, es bleiben nach dem Entbarten noch kleine Reste des Sauerstoffschneidbartes am Werkstück oder sie werden nur hochgeklappt. Auch können sich kleine Stücke des Sauerstoffschneidbartes zwischen benachbarte Kolben und Scherkappen klemmen und die Wirksamkeit des Entbarters sehr herabsetzen. Auch das verringert die Entbartungsrate. Zugänglichkeit, Sicherheit, Verfügbarkeit und geringer Arbeitslärm gehören zu den Vorteilen dieses Entbarters.

Ein kippbarer Entbarter mit vorderer und hinterer, gerade durchgehender Scherleiste ist die einfachste und kostengünstigste Ausführung eines Entbarters. Wenngleich beim jeweiligen Kippen eine Scherleiste gut gegen die Unterfläche des Werkstücks angedrückt wird, so sind die schlechten Entbartungsraten bei geneigter, konvexer oder konkaver Unterfläche und das unvermeidbare Hin- und Herfahren die unverzeihlich großen Nachteile dieses Entbarters, auch wenn die Entbartungskräfte durch eine schräge, gleichmäßig zunehmend angreifende Scherleiste und damit auch der Arbeitslärm sehr gering gehalten werden.

Der bisher zweifelsfrei günstigste Entbarter für ein zeitunabhängiges, schnelles Entbarten an ohne Stopp durchlaufendem Werkstück mit geringstem Platzbedarf im Rollgang, zum Beispiel hinter einer Stahlstranggießanlage in einer Rollgangslücke, ist der Rotationsentbarter mit dem schnelldrehenden, mit Hämmern bestückten Rotor. Natürlich sind Kraftaufwand und Anlagekosten sehr hoch, aber Schräglage des Werkstücks, konvexe und konkave Unterfläche und unterschiedliche Bewegungsgeschwindigkeiten sind in Grenzen keine Schwierigkeiten für diesen Entbarter, wenn der allerdings knapp bemessene Toleranzabstand zur Unterfläche eingehalten wird.

### Dafür sind andere Probleme aber sehr herausragend:

Da der Sauerstoffschneidbart durch die vielen kleinen Hämmer oft und ungleichmäßig mit großer Kraft und großer Geschwindigkeit durchbrochen wird, entsteht ein sehr großer Lärm. Der Verschleiß ist unverhältnismäßig hoch und oft kommt es zu Zerstörungen von Hämmerchen, ebenso oft oder öfter kommt es zum Hochklappen und somit zum Nichtentfernen von Bartteilen.

Der Wartungsaufwand ist durch den Austausch oder Ersatz der kleinen Hämmer und den notwendigen Ab- und Wiederanbau von Schutzblechen besonders hoch, zumal letztere gegen mit hoher Energie wegfliegende Bartreste oder Hammerteile sehr sorgfältig befestigt werden müssen. Sonst kommt es zu schweren Verletzungen oder Beschädigungen durch weit wegfliegende Metallteile.

Viel leiser und sicherer ist ein Entbarter der mit langsamerer, zum Beispiel höchstens mit Rollgangsgeschwindigkeit arbeitet. Dazu wird ein balkenförmiger Kolbenkörper unter dem Werkstück angeordnet und mit pressluftbetätigten Entbartungskolben bestückt, nach dem Andrücken gegen die Unterfläche gegen den ruhenden oder nur langsam bewegten Brennschneidbart zum Entbarten verschoben. Auch kann das Werkstück mit dem Sauerstoffschneidbart gegen den fest stehenden Entbarter verschoben werden und das geschieht zweimal pro Werkstück an jedem Ende aus dem Werkstück heraus zum jeweiligen Ende hin und darüber hinaus. Dabei fliegen zwar keine Metallteile gefährlich umher, auch wenn keine umständliche Schutzverkleidung vorhanden ist, aber das Werkstück muss zeitraubend und mehr Platz brauchend hin und her gefahren werden. Aber auch bei dieser Ausführung kommt es zum Hochklappen von Teilen von Sauerstoffschneidbartteilen.

Aus der EP 1 172 159 A1 ist ein mechanischer Schälentbarter zum Entfernen von Sauerstoffschneidbärten und -schneidperlen nach dem thermochemischen Querteilen oder Längsteilen von stählernen Werkstücken wie Brammen, Blöcken und Knüppeln bekannt. Auf einer nur leicht zur Senkrechten in Transportrichtung des Werkstückes geneigten Grundplatte sitzt ein mittels Achsstummel mit einem Getriebe und einem Antrieb verbundener Entbarterteller. Dieser ist an seiner Oberseite entsprechend der gewählten Neigung der Lagerplatte kegelig ausgeführt, so dass er in seiner Mittelachse auf der Ablaufseite des Werkstückes parallel zu dessen Unterseite ist und damit auch die Schneide eines Schälmessers. In den Kegelflächen sitzen die Schälmesser wechselweise und seitlich versetzt parallel neben einem Mittelachsenpaar, wodurch beim Drehen gegen den Sauerstoffschneidbart dieser zuerst vom Inneren, zur Mitte des Entbartertellers hin liegenden, scharfkantigen Teil des Schälmessers erfasst und durchbrochen wird. Danach erfolgt das Abschälen dieses Teiles eines Sauerstoffschneidbartes mit der Schneide des Schälmessers. Abgesehen von den bekannten Ausführungen, Scherkappen mittels nach oben drückender Kolben in Pressluftzylindern gegen die Unterfläche des Werkstückes zu legen, erlaubt das drehende Anheben der Schälmesser durch die geneigte Anordnung des Entbartertellers auch eine federgelagerte Ausführung des Schälmessereinbaus. Hierbei liegen die Schälmesserinnenenden in Transportrichtung des Werkstückes au-ßerhalb der Mittelachsen des Entbartertellers und sind in Vertiefungen längsverschieblich.

Es ist Aufgabe der Erfindung, einen Kegel-Schälentbarter der eingangs genannten Art zu schaffen, der auf herstellungstechnisch einfache und kostengünstige Art ein gleichmäßig fortlaufendes und gedämpfteres Abschälen von Sauerstoffschneidbärten und -schneidperlen nach dem thermochemischen Querteilen oder Längsteilen von stählernen Werkstücken ermöglicht.

Erfindungsgemäß wird die Aufgabe dadurch gelöst, dass die auf der Nabe bzw. Welle gelagerte Kegelstumpf-Walze bzw. Kegelstumpf-Segmentspeichen federnd mittels Pressluft, Hydraulik, Schrauben-Druckfeder oder eine mechanisch verstellbare Auflage vorgespannt und höhenverstellbar bewegbar ist bzw. sind.
Bei Verwendung von Pressluft muss dabei gegen einen oberen oder einen unteren Anschlag verstellt werden. Bevorzugt ist hierbei die die Kegelstumpf-Walze oder Kegelstumpf-Segmentspeichen tragende Welle als Vielkeilwelle ausgebildet.

Gemäß einer weiteren Ausgestaltung der Erfindung sind die Größe, Anzahl und Anordnung der spiraligen Schälmesser an der Manteloberfläche der Kegelstumpf-Walze oder der Kegelstumpf-Segmentspeichen derart angeordnet, dass im Stillstand des Kegel-Schälentbarters das Werkstück über einer Lücke zwischen den Schälmessern oder zwischen den Kegelstumpf-Segmentspeichen für einen freien Durchlauf des Werkstücks zwischen den Entbartungen bewegbar ist. Demgemäß berührt das Werkstück auch bei betriebsbedingt leichtem Absinken die Oberfläche des Kegelstumpfmantels oder die Schälmesser in einer Stellung - die Mitte einer Lücke zwischen den Schälmessern unter der Werkstückunterfläche - beim Durchlaufen nicht.

Weiterhin steht zum Längsentbarten die obere Mantellinie der mit den Schälmessern bestückten Kegelstumpf-Walze oder Kegelstumpf-Segmentspeichen parallel oder nahezu parallel oder mit kleinem Winkel zum Sauerstoffschneidbart und diese zeigt leicht geneigt unter das Werkstück. Somit kommt es erst unter dem Werkstück zu einer Berührung und nicht schon an einer Vorderkante.

Des Weiteren kann vorgesehen sein, dass zum Längsentbarten der Kegel-Schälentbarter an einer Kippachse zum Entbartungsbeginn hochklappbar gelagert ist.

Gemäß einer weiteren Ausgestaltung des erfindungsgemäßen mechanischen Kegelentbarters ist das Gehäuse des Entbarters zur Aufnahme von Antrieb, Doppellager, Welle und Kegelstumpf-Walze bzw. Kegelstumpf-Segmentspeichen mit Nabe und Schälmessern zum nachstellbaren Einbau am Einsatzort zur Verstellung in Höhe, Längs- und Querrichtung mit einem einfachen Untergehäuse versehen, das in einem Fundament fest verankert und mittels Verstellschrauben verschiebbar ist. Zwischen Untergehäuse und Gehäuse sind eine Achse mit Lagern sowie ein federndes Element vorgesehen, damit der Kegelentbarter sich der Werkstückunterfläche auch bei verdrehten Querschnitten im Entbartungsbereich anpassen kann.

Der der Erfindung zugrunde liegende Gedanke wird in der nachfolgenden Beschreibung anhand von Ausführungsbeispielen, die in den Zeichnungen dargestellt sind, näher beschrieben. Es zeigen:
- Bild 1: eine Seitenschnittansicht eines erfindungsgemäßen mechanischen Kegel-Schälentbarters mit einer Kegelstumpf-Walze zum Entfernen von Sauerstoffschneidbärten und -schneidperlen nach dem thermochemischen Querteilen oder Längsteilen von stählernen Werkstücken wie Brammen, Blöcken und Knüppeln,
- Bild 2: eine Vorderansicht der Kegelstumpf-Walze des KegelSchälentbarters gemäß Bild 1,
- Bild 3: eine Seitenschnittansicht eines erfindungsgemäßen mechanischen Kegel-Schälentbarters mit KegelstumpfSegmentspeichen, und
- Bild 4: eine Vorderansicht der Kegelstumpf-Segmentspeichen des Kegel-Schälentbarters gemäß Bild 3.

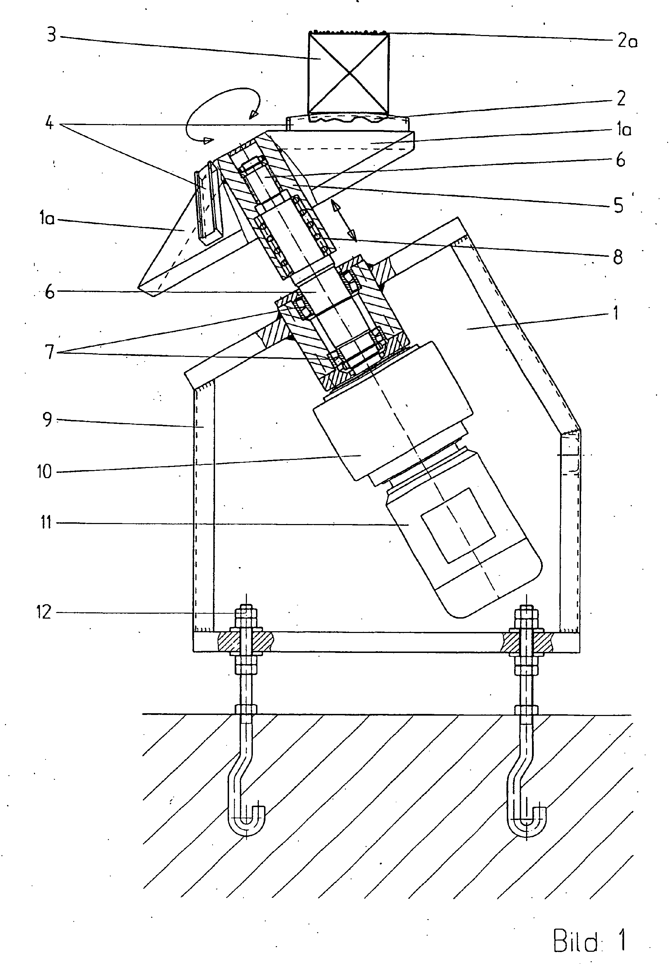

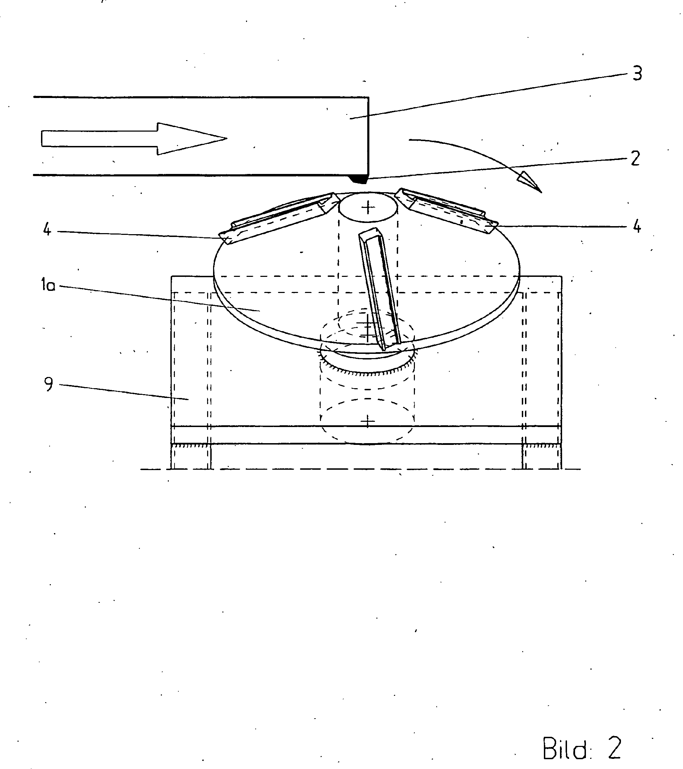

Die im Folgenden beschriebene Ausführung eines Kegel-Schälentbarters 1, wie in Bild 1 und in Bild 2 dargestellt, wird grundsätzlich gekennzeichnet durch eine Konstruktion und eine Wirkungsweise, die einem Schäler beziehungsweise einem Schälen entsprechen. Das heißt, ein Sauerstoffschneidbart 2 oder Schneidperlen 2a an einem Werkstück 3 werden abgeschält und zwar in einer über die Werkstückbreite gleichmäßig fortlaufende, ziemlich langsamen Bewegung von etwa 3 m/min bis etwa 150 m/min über der Bartgeschwindigkeit durch den Werkstücktransport, einer möglichst bartlangen, wenn auch aus Schälmesserstücken von 20 mm bis 100 mm zusammengesetzten, ununterbrochenen Schneide des so genannten Schälmessers 4, am Werkstück entlang gegen den Sauerstoffschneidbart 2 drückend. Dabei steht das Schälmesser 4 unter 5 bis 30° zum Sauerstoffschneidbart 2 und unter 85° bis 60° zur Vorwärtsbewegungsrichtung des Schälmessers 4.

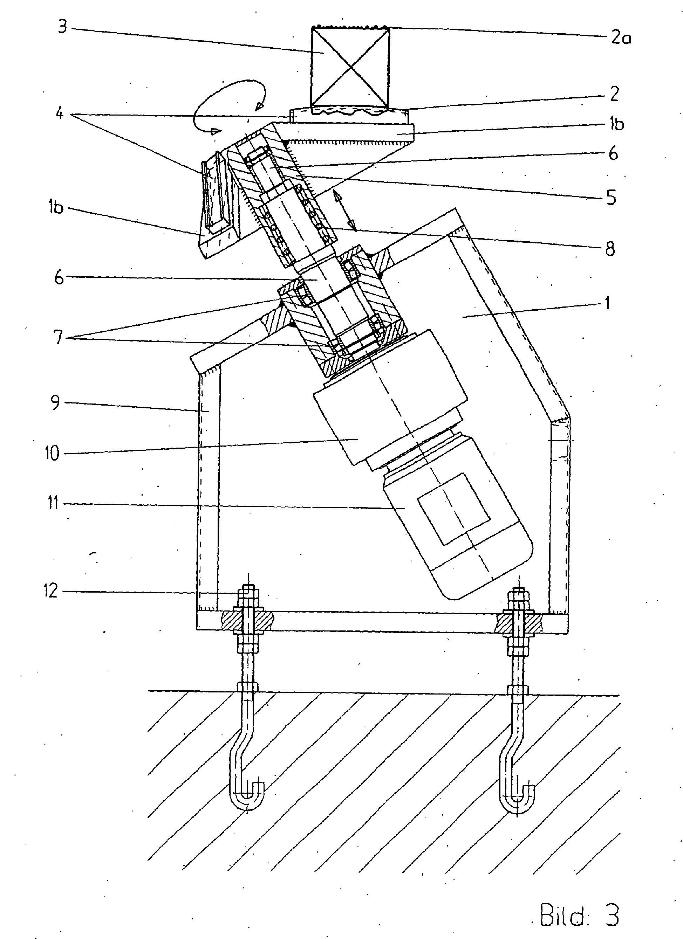

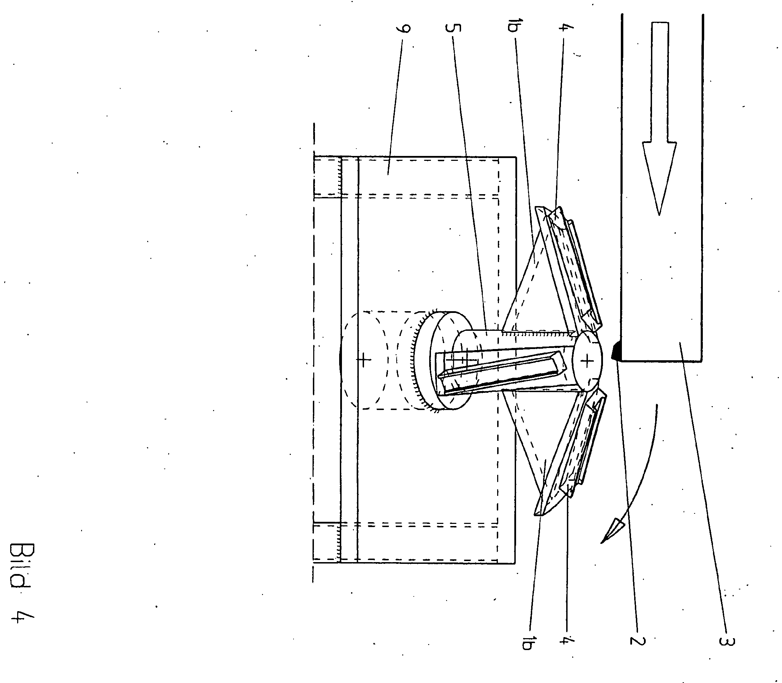

Dieses Schälmesser 4 mit einem Schneidwinkel = Arbeitswinkel von 45 bis 90° zwischen der Unterfläche des Werkstückes 3 und Schälmesser 4 ist als Schälmesserwendel 4 oder als mehrfache Schälmesserwendel 4 mit Barteinlauf-gerechtem Abstand ausgeführt, das heißt, als Längsspirale mit einem großen Durchmesser und einer großen Steigung am Mantel einer kegeligen Entbarterwalze 1a oder der ihr entsprechenden Kegelstumpf-Segmentspeichen 1b, wie in Bild 3 und Bild 4 gezeigt.

Damit kommt bei einer Drehung immer nur ein Punkt des Schälmessers 4 in Berührung mit dem Werkstück 3 und dem Sauerstoffschneidbart 2, sowohl in Vorwärts- als auch in Aufwärtsrichtung, wobei letztere durch ein elastisches gedämpftes Hochschieben der Nabe 5 des Kegel-Schälentbarters 1 bewirkt wird.

Der dafür vorgeschlagene Kegel-Schälentbarter 1 besteht aus folgenden Bauteilen mit den zugehörigen Aufgaben: Die Kegelstumpf-Walze 1a oder die Kegelstumpf-Segmentspeichen 1b tragen zum Abschälen des Sauerstoffschneidbartes 2 oder der - schneidperlen 2a vom Werkstück 3 eine Schälmesserwendel 4, die aus mehreren 20 mm bis 100 mm langen Schälmesserstücken 4 in wendelgerechter Form gebogen und verdreht besteht und ist mit ihrer Nabe 5 verschiebbar auf einer Welle 6, vielleicht als Vielkeilwelle 6, ausgeführt, die ihrerseits in einem stabilen Doppellager 7 zur Aufnahme von großen Längs- und Querkräften geführt ist.

Zwischen der Nabe 5 und der Vielkeilwelle 6 ist eine Schrauben-Druckfeder 8 angeordnet, um zum einen die Schälmesser 4 im Betrieb an die Unterfläche des Werkstückes 3 anzudrücken, als auch zum anderen beim Verändern der Höhenlage des Werkstücks 3 nachzugeben. Anstelle des Einsatzes einer Schrauben-Druckfeder 8 kann auch die Nabe 5 in diesem Bereich als Zylinder und die Welle 6 als feststehender Kolben für eine Federung mit Pressluft, ja auch zum gewollten Heben und Senken der Kegelstumpf-Walze 1a dienen.

Hier zeigt sich der Vorteil des Kegel-Schälenbarters 1, dass die Welle 6 sowohl für die Drehenergie zum Entbarten dient als auch ein andrückendes Verschieben in der Höhe ermöglicht. Auch ist damit ein leichtes Abziehen schräg nach oben zu Austausch- und Reparaturzwecken gegeben.

Die Doppellager 7 sitzen in einem Rahmen 9 oder Gehäuse, in dem auch das Getriebe 10 und der Motor 11 untergebracht sind, der aber auch selbst höhen-, längs- und seitenverstellbar mit Verstellschrauben 12 und Muttern auf einer Fundamentplatte oder auf dem Fundament befestigt ist. Der Antriebssatz mit Motor 11 und Getriebe 10 ist von innen gegen den Rahmen 9 geflanscht und mit der Welle 6 verbunden.

Anstelle mit einer Kegelstumpf-Walze 1a kann der Kegelschälentbarter 1 auch mit Kegelstumpf-Segmentspeichen 1b ausgeführt werden. Gemäß Bild 3 ist dabei der Konusmantel, also die Kegelwalze durch ein, zwei, drei oder mehr Kegelstumpf-Segmentspeichen 1b aus Fertigungsgründen ersetzt, die breit genug sind, um die spiraligen Schälmesserwendel 4 aufzunehmen und die im Innern von der Nabe 5 zusammengehalten werden.

Wichtig ist in allen Fällen, dass sich im Stillstand des Kegel-Schälentbarters 1 das Werkstück 3 über einer Lücke zwischen den Schälmessern 4 oder zwischen den Kegelstumpf-segmentspeichen 1b für einen freien Durchlauf des Werkstücks 3 zwischen den Entbartungen bewegt. Dazu muss der Motor 11 nach einem Entbartungsvorgang entsprechend genau abgebremst werden. Für den nachfolgenden Entbartungsvorgang am Kopf bzw. Fuß des Werkstückes 3 muss die Drehrichtung des Motors 11 jeweils umgekehrt werden.

Zum Längsentbarten muss der Kegelschälentbarter 1 gegenüber dem gleichartigen Querentbarten etwa parallel unter dem Längsbart angeordnet werden. Zum Entfernen der Sauerstoffschneidperlen 2a an der oberen Werkstückkante muss er um 180° gedreht und über dem Werkstück 3 hängend mit geeignetem Abstand eingebaut sein.

### Liste der Bezugszeichen

- 1: Kegel-Schälentbarter
- 1a: Kegelstumpf-Walze
- 1b: Kegelstumpf-Segmentspeichen
- 2: Sauerstoffschneidbart
- 2a: Sauerstoffschneidperlen
- 3: Werkstück, Knüppel, Block, Bramme
- 4: Schälmesser, Schälmesserwende, Schälmesserstück
- 5: Nabe
- 6: Welle, Vielkeilwelle
- 7: Doppellager
- 8: Schrauben-Druckfeder
- 9: Rahmen, Gehäuse
- 10: Getriebe
- 11: Motor
- 12: Verstellschraube

### Literaturhinweise:

Europäische Patentschrift EP 0671 230 B1
Europäische Patentschrift EP 0 672487 B1
Europäische Patentschrift EP 0 947 264 A2
Europäische Patentschrift Anmeldung AUTE 40
Europäische Patentschrift Anmeldung AUTE 41
Europäische Patentschrift EP 0 463 201 A1

## Patentansprüche

1. Mechanischer Kegel-Schälentbarter (1) zum Entfernen von Sauerstoffschneidbärten (2) und -schneidperlen (2a) nach dem thermochemischen Querteilen oder Längsteilen von auf einem Rollgang ruhenden oder sich bewegenden stählernen Werkstücken wie Brammen, Blöcken und Knüppeln (3) in heißem und kalten Zustand, wobei eine unter einem Winkel von 45 bis 75° zur Waagerechten auf einer Nabe (5) einer Welle (6) gelagerte Kegelstumpf-Walze (1a) oder ihr entsprechende Kegelstumpf-Segmentspeichen (1b) mit ihren unter dem längsgeteilten oder quergeteilten Werkstück (3) stehenden Oberflächenlinien waagerecht angeordnet sind, wobei die biegefeste Welle (6) mittels einem Doppellager (7) für Längs- und Querkräfte in einem Gehäuse oder Rahmen (9) gehalten und von einem motorischen oder hydraulischen Antrieb (10,11) drehbar ist und wobei an den Oberflächen der Kegelstumpf-Walze (1a) oder Kegelstumpf-Segmentspeichen (1b) ein oder mehrere Schälmesser (4) spiralig mit einem Winkel von 0 bis 45° zur Kegelmittelachse verlaufend angeordnet sind, so dass das Schälmesser (4) unter einem Winkel von 5 bis 30° zum Sauerstoffschneidbart (2) steht, **dadurch gekennzeichnet, dass** die auf der Nabe (5) bzw. Welle (6) gelagerte Kegelstumpf-Walze (1a) bzw. Kegelstumpf-Segmentspeichen (1b) federnd mittels Pressluft, Hydraulik, Schrauben-Druckfeder (8) oder eine mechanisch verstellbare Auflage vorgespannt und höhenverstellbar bewegbar ist bzw. sind.

2. Mechanischer Kegelentbarter nach Anspruch 1, **dadurch gekennzeichnet, dass** die Größe, Anzahl und Anordnung der spiraligen Schälmesser (4) an der Manteloberfläche der Kegelstumpf-Walze (1a) oder der Kegelstumpf-Segmentspeichen (1b) derart angeordnet sind, dass im Stillstand des Kegel-Schälentbarters (1) das Werkstück (3) über einer Lücke zwischen den Schälmessern (4) oder zwischen den Kegelstumpf-Segmentspeichen (1b) für einen freien Durchlauf des Werkstücks (3) zwischen den Entbartungen bewegbar ist.

3. Mechanischer Kegelentbarter nach Anspruch 1, **dadurch gekennzeichnet, dass** die die Kegelstumpf-Walze (1a) oder Kegelstumpf-Segmentspeichen (1b) tragende Welle (6) als Vielkeilwelle ausgebildet ist.

4. Mechanischer Kegel-Schälentbarter nach einem der Ansprüche 1 bis 3, **dadurch gekennzeichnet, dass** zum Längsentbarten die obere Mantellinie der mit den Schälmessern (4) bestückten Kegelstumpf-Walze (1a) oder Kegelstumpf-Segmentspeichen (1b) parallel oder nahezu parallel oder mit kleinem Winkel zum Sauerstoffschneidbart (2) steht und diese leicht geneigt unter das Werkstück (3) zeigt.

5. Mechanischer Kegel-Schälentbarter nach einem der Ansprüche 1 bis 4, **dadurch gekennzeichnet, dass** zum Längsentbarten der Kegel-Schälentbarter (1) an einer Kippachse zum Entbartungsbeginn hochklappbar gelagert ist.

6. Mechanischer Kegelentbarter nach einem der Ansprüche 1 bis 5, **dadurch gekennzeichnet, dass** das Gehäuse (9) des Entbarters zur Aufnahme von Antrieb (10,11), Doppellager (7), Welle (6) und Kegelstumpf-Walze (1a) bzw. Kegelstumpf-Segmentspeichen (1b) mit Nabe (5) und Schälmessern (4) zum nachstellbaren Einbau am Einsatzort zur Verstellung in Höhe, Längs- und Querrichtung mit einem einfachen Untergehäuse versehen ist, das in einem Fundament fest verankert und mittels Verstellschrauben (12) verschiebbar ist.

7. Mechanischer Kegelentbarter nach Anspruch 6, **dadurch gekennzeichnet, dass** zwischen Untergehäuse und Gehäuse (9) eine Achse mit Lagern sowie ein federndes Element vorgesehen sind.

## Claims

1. A mechanical burr remover (1) for oxygen cutting burrs (2) and cutting pearls (2a) after the transversal or longitudinal thermochemical cutting of steel workpieces like slabs, blooms and billets(3)resting on a roller table or moving, in hot and cold condition, with an edging roll (1a) supported under an angle of 45 to 75° to the level on a hub (5) of a shaft (6) or truncated segment spokes (1b) corresponding to it being arranged horizontally with their surface lines located below the longitudinally or transversally cut workpiece, with the shaft (6) resistant to bending being retained by means of a double bearing (7) for longitudinal and transversal forces in a housing or frame (9) or rotatable by a motor or hydraulic drive (10, 11) and with one or several peelers (4) being spirally arranged at an angle of 0 to 45° to the cone center line on the surfaces of the edging roll (1a) or the truncated segment spokes (1b), so that the peeler (4) is located under an angle of 5 to 30° to the oxygen cutting burr (2), **characterized in that** the edging roll (1a) supported on the hub (5) and shaft (6) resp. and/or the truncated segment spokes (1b) is or are pretensioned and movable adjustable in height resiliently by means of compressed air, hydraulics, helical compression spring (8) or a mechanically adjustable support.

2. A mechanical burr remover according to claim 1, **characterized in that** size, number and arrangement of the spiral peelers(4)on the surface area of the edging roll (1a) or the truncated segment spokes (1b) are arranged such that at standstill of the burr remover (1) the workpiece (3) is freely movable over a gap between the peelers (4) or between the truncated segment spokes (1b) for a free passage of the workpiece (3) between the burr removals.

3. A mechanical burr remover according to claim 1, **characterized in that** the shaft (6) supporting the edging roll (1a) or the truncated segment spokes (1b) is formed as a multiple splined shaft.

4. A mechanical burr remover according to one of the claims 1 to 3, **characterized in that** for longitudinal burr removal the upper surface line of the edging roll (1a) equipped with the peelers (4) or truncated segment spokes (1b) is parallel or almost parallel or at minor angle to the oxygen cutting burr (2)and points below the workpiece slightly inclined.

5. A mechanical burr remover according to one of the claims 1 to 4, **characterized in that** for longitudinal burr removal the burr remover (1) is supported in an upward tilting way on a tilting axis at the start of burr removal.

6. A mechanical burr remover according to one of the claims 1 to 5, **characterized in that** the housing (9) of the burr remover to accommodate the drive(10,11), the double bearing(7), the shaft(6) and the edging roll (1a) and/or the truncated segment spokes (1b) with hub (5) and peelers (4) for readjustable installation on site for adjustment in height, in longitudinal and transverse direction is provided with a simple sub-housing firmly anchored in a foundation and movable by means of adjusting screws (12).

7. A mechanical burr remover according to claim 6, **characterized in that** between sub-housing and housing (9) an axis with bearings as well as a resilient element is provided.

## Revendications

1. Dispositif conique mécanique d'ébavurage (1) destiné à enlever des bavures d'oxycoupage (2) et des perles d'oxycoupage (2a) après le découpage transversal ou longitudinal thermochimique de pièces en acier qui reposent ou se déplacent sur un tablier à rouleaux, telles que brames, lingots et billettes (3) à l'état chaud et froid, un cylindre tronconique (1a) logé sous un angle compris entre 45 et 75° par rapport à l'horizontale sur un moyeu (5) d'un arbre (6) ou des rayons de segment tronconiques (1b) correspondant audit cylindre tronconique, avec leurs lignes de surface situées sous ladite pièce (3) découpée longitudinalement ou transversalement, étant disposés horizontalement, l'arbre résistant à la flexion (6) étant maintenu par l'intermédiaire d'un palier double (7), conçu pour les efforts longitudinaux et transversaux, dans un carter ou bâti (9) et pouvant être tourné par un dispositif d'entraînement moteur ou hydraulique (10, 11), et sur les surfaces dudit cylindre tronconique (1a) ou desdits rayons de segment tronconiques (1b) étant disposés une ou plusieurs lames d'ébavurage (4) de manière à s'étendre en spirale avec un angle compris entre 0 et 45° par rapport à l'axe médian du cône de sorte que ladite lame d'ébavurage (4) est placée sous un angle compris entre 5 et 30° par rapport à la bavure d'oxycoupage (2), **caractérisé par le fait que** le cylindre tronconique (1a) ou bien les rayons de segment tronconiques (1b) logé(s) sur le moyeu (5) ou bien sur l'arbre (6) est ou bien sont précontraint(s) et réglable(s) en hauteur de manière élastique par air comprimé, par hydraulique, au moyen d'un ressort de compression à boudin (8) ou d'un appui mécaniquement réglable.

2. Dispositif conique mécanique d'ébavurage selon la revendication 1, **caractérisé par le fait que** la taille, le nombre et la disposition des lames hélicoïdales d'ébavurage (4) sur la surface latérale du cylindre tronconique (1a) ou des rayons de segment tronconiques (1b) sont tels que, lors de l'arrêt du dispositif conique d'ébavurage (1), ladite pièce (3) peut être déplacée sur une lacune entre les lames d'ébavurage (4) ou entre les rayons de segment tronconiques (1b) pour un passage libre de la pièce (3) entre les ébavurages.

3. Dispositif conique mécanique d'ébavurage selon la revendication 1, **caractérisé par le fait que** l'arbre (6) supportant le cylindre tronconique (1a) ou les rayons de segment tronconiques (1b) est réalisé comme arbre cannelé.

4. Dispositif conique mécanique d'ébavurage selon l'une des revendications 1 à 3, **caractérisé par le fait que**, pour l'ébavurage longitudinal, la génératrice supérieure du cylindre tronconique (1a) ou des rayons de segment tronconiques (1b) muni(s) des lames d'ébavurage (4) est placée parallèlement ou presque parallèlement ou avec un petit angle par rapport à la bavure d'oxycoupage (2) et que cette génératrice supérieure montre légèrement inclinée sous ladite pièce (3).

5. Dispositif conique mécanique d'ébavurage selon l'une des revendications 1 à 4, **caractérisé par le fait que**, pour l'ébavurage longitudinal, le dispositif conique d'ébavurage (1) est logé sur un axe de basculement de manière à pouvoir être relevé au début de l'ébavurage.

6. Dispositif conique mécanique d'ébavurage selon l'une des revendications 1 à 5, **caractérisé par le fait que** le carter (9) du dispositif d'ébavurage, qui reçoit le dispositif d'entraînement (10, 11), le palier double (7), l'arbre (6) et le cylindre tronconique (1a) ou bien les rayons de segment tronconiques (1b) avec le moyeu (5) et les lames d'ébavurage (4), est, pour l'installation ultérieure sur le lieu d'utilisation pour le réglage en hauteur, dans les sens longitudinal et transversal, pourvu d'un simple carter secondaire qui est solidement ancré dans un fondement et déplaçable par le biais de vis de réglage (12).

7. Dispositif conique mécanique d'ébavurage selon la revendication 6, **caractérisé par le fait qu'**un axe avec paliers ainsi qu'un élément faisant ressort sont prévus entre ledit carter secondaire et le carter (9).
